# EUROPÄISCHE PATENTANMELDUNG

(11) **EP 2 924 959 A1**
(43) Veröffentlichungstag der Anmeldung: **30.09.2015**
(21) Anmeldenummer: 14162083.1
(22) Anmeldetag: 27.03.2014
(51) Int. Cl.: H04M 1/02, H02G 3/14, H02B 1/48

(54) **Montagesystem, insbesondere für die Gebäudeinstallation, mit gelenkiger Lagerung eines Trägers für Funktionseinheiten**

(71) Anmelder: GIRA GIERSIEPEN GmbH & Co. KG, 42477 Radevormwald (DE)
(72) Erfinder: Klatt, Torsten, 52152 Simmerath (DE); Prescott, Oliver, 52072 Aachen (DE); Gronefeld, Johannes, 52064 Aachen (DE)
(74) Vertreter: Patentanwälte Dr. Solf & Zapf

(57) **Zusammenfassung**

Die Erfindung betrifft ein Montagesystem (1), insbesondere für die Gebäudeinstallation, mit einem aus einem zusammengeklappten Zustand in einen ausgeklappten Zustand bewegbaren Träger (2) für Funktionseinheiten, welcher über eine Schwenkeinrichtung (4, 40) für den Träger (2) gelenkig an einem Basisteil (3) gelagert ist. Um zu gewährleisten, dass ein derartiges System bei hoher Funktionalität der Schwenkeinrichtung (4, 40) nur einen minimalen Bauraum einnimmt und insbesondere eine Rasteraufteilung des Trägers (2) nicht beeinträchtigt sowie keine zusätzlichen Verblendleisten erfordert, wird vorgeschlagen, dass die Schwenkeinrichtung (4, 40) im zusammengeklappten Zustand über mindestens zwei Freiheitsgrade der Bewegung verfügt, und zwar über mindestens einen Freiheitsgrad hinsichtlich einer translatorischen Bewegung (P1) des Trägers (2) gegenüber dem Basisteil (3) und über mindestens einen Freiheitsgrad hinsichtlich einer Schwenkbewegung (P1') des Trägers (2) gegenüber dem Basisteil (3).

## Beschreibung

Die vorliegende Erfindung betrifft ein Montagesystem, insbesondere für die Gebäudeinstallation, mit einem aus einem zusammengeklappten Zustand in einen ausgeklappten Zustand bewegbaren Träger für Funktionseinheiten, welcher über eine Schwenkeinrichtung für den Träger gelenkig an einem Basisteil gelagert ist.

Aus der EP 2 644 063 A1 ist ein Montagesystem, insbesondere zur Türkommunikation, bekannt, welches einen Träger für Funktionseinheiten umfasst. Die Funktionseinheiten können nach unterschiedlicher Art ausgebildet sein. Mindestens eine erste Funktionseinheit und/oder mindestens eine zweite Funktionseinheit sind jeweils in einer Ausnehmung des Trägers in einem aus Spalten und/oder Reihen bestehenden Raster festlegbar. Für das Raster sind quadratische Einheitsflächen mit spezieller, auf die unterschiedliche Arten der Ausbildung der Funktionseinheiten abgestimmter Bemessung der Grundseiten vorgegeben, die es gestatten, als erste und zweite Funktionseinheiten elektrische Baueinheiten, wie Schalter, Taster, Kameras usw., zusammen mit nichtelektrischen Baueinheiten, wie insbesondere Briefkästen, in dem derart modular aufgebauten System zu montieren. Auch Dekorationsplatten können als Funktionseinheiten vorgesehen sein. Das bekannte modulare Montagesystem gestattet vorteilhafterweise eine Baukastenbauweise, eine flexible Gestaltung der Anordnung der Funktionselemente und ein Design mit ästhetischem Erscheinungsbild, wobei es als Kommunikationssystem an Türen, als Kommunikations-Paneel oder auch an freistehenden Briefkästen zur Anwendung kommen kann. Es eignet sich auch zum Einbau in ein eine Systemfront einfassendes Gehäuse oder -ohne Gehäuse - zur rahmenlosen Montage bei Unterputz, Aufputz, Mauereinbau oder Kommunikationssäulen oder als eine bauseitige Frontplatte. Dabei können die einzelnen Funktionsmodule mit ihren zugehörigen Funktionsblenden in dem gemeinsamen Träger derart befestigt werden, dass sie exakt zueinander ausgerichtet sind, wobei zwischen den einzelnen Funktionsblenden ein genaues, optimal sehr kleines Spaltbreitenmaß eingehalten werden kann.

Ein Montagesystem der eingangs genannten Art ist aus der DE 31 08 056 C2 bekannt. Das Dokument beschreibt eine Türanlage mit einem gemeinsamen Rasterrahmen zur Aufnahme von einzelnen Funktionseinheiten, wie Namensschildern, Klingeltasten, Türlautsprechern usw., für die durch die Rasteranordnung ein flexibles Baukastensystem geschaffen werden soll. Der Rasterrahmen, welcher einen Träger für die Funktionseinheiten darstellt, ist gelenkig mit einem Gehäuse verbunden und weist eine oder mehrere durch Stege getrennte, gleich große Rasteröffnungen auf, um Funktionseinheiten mit gleichen äußeren Abmessungen aufzunehmen. Das Gehäuse, welches im Sinne eines Basisteils fungiert, umfasst einen Verblendrahmen mit unterseitigen Verstärkungsstegen, der mittels Befestigungsbolzen an einem Unterputzgehäuse befestigbar ist. Neben Gummiabdichtungen, die zwischen Funktionseinheiten und Rasterrahmen liegen, sind eine weitere Abdichtung und ein Montagetoleranz-Ausgleich vorgesehen, indem das Gehäuse in einen Abdicht-, Ausgleichs- und Verblendrahmen einfügbar ist und mit diesem zusammen montiert werden kann. In dem System ist eine Schwenkeinrichtung in Form von Gelenken vorgesehen, deren Drehpunkte nahe der Außenkante des Rasterrahmens liegen. Die Gelenke bestehen aus zwei einstückig mit dem Rasterrahmen ausgebildeten, um 90° nach außen abgewinkelten Laschen, die an ihren freien Enden über Gelenkbolzen mit den freien Enden von entsprechenden L-förmigen Gegenlaschen verbunden sind. Da das Raster nicht die gesamte Anlage umfasst, sind zusätzliche Verblendleisten, wie beispielsweise für das Gelenk zwischen Rasterrahmen und Gehäuse, erforderlich.

Der vorliegenden Erfindung liegt die Aufgabe zu Grunde, ein Montagesystem der eingangs genannten Art zu schaffen, das bei hoher Funktionalität der Schwenkeinrichtung einen minimalen Bauraum einnimmt und insbesondere eine Rasteraufteilung des Trägers nicht beeinträchtigt sowie keine Verblendleisten zur Abdeckung unerwünscht breiter Spaltmaße erfordert.

Erfindungsgemäß wird dies dadurch erreicht, dass die Schwenkeinrichtung zur Überführung des Trägers aus dem zusammengeklappten Zustand in den ausgeklappten Zustand über mindestens zwei Freiheitsgrade der Bewegung verfügt, und zwar über mindestens einen Freiheitsgrad hinsichtlich einer translatorischen Bewegung des Trägers gegenüber dem Basisteil und über mindestens einen Freiheitsgrad hinsichtlich einer Schwenkbewegung des Trägers gegenüber dem Basisteil.

Was den Begriff "Freiheitsgrad" betrifft, so wird für diesen im Rahmen der vorliegenden Anmeldung folgendes Verständnis zugrunde gelegt: Ein Körper nimmt im Raum eine bestimmte Lage ein und kann Bewegungen ausführen. Die Möglichkeit eines Körpers, eine bestimmte Bewegung auszuführen, wird als Freiheit bezeichnet. Ein im Raum vollständig freier Körper besitzt sechs Bewegungsmöglichkeiten, also sechs Freiheiten. Diese Freiheiten sind die Translationen in x-, y- und z-Richtung und die Rotationen um die entsprechenden drei Achsen. Die Anzahl der möglichen Bewegungsfreiheiten wird als Freiheitsgrad f definiert. Der freie Körper im Raum hat also den Freiheitsgrad f = 6. Bei beweglichen Paarungen, wie in Gelenken, Lagern und Führungen, muss mindestens in einer Richtung die Bewegung eingeschränkt sein, d. h. dass bei solchen Paarungen Freiheitsgrade von maximal f = 5 bis minimal f = 1 möglich sind. Liegt ein Freiheitsgrad von f = 0 vor, ist keine Bewegung der Körper zueinander mehr möglich. Man spricht dann von einer starren Verbindung. Eine Einschränkung des Freiheitsgrades wird auch als Unfreiheit bezeichnet. Eine gesperrte Freiheit f wird somit zur Unfreiheit u. Die erfindungsgemäß vorgesehene Schwenkeinrichtung dient dazu, den Träger des erfindungsgemäßen Montagesystems mit hoher Genauigkeit zunächst translatorisch von dem Basisteil zu entfernen, um ihn dann in eine Position zu verschwenken, in der die Rückseiten der Funktionseinheiten zum Verkabeln gut erreichbar sind, z. B. in eine Position, die durch einen Winkel zwischen Träger und Basisteil gekennzeichnet ist, der im Bereich von 60° bis 120°, insbesondere im Bereich von 70° bis 90°, liegt.

Der bei der eingangs genannten Montageeinrichtung im Stand der Technik nicht vorhandene Freiheitsgrad hinsichtlich der translatorischen Bewegung des Trägers, welcher auch als Schiebefreiheitsgrad bezeichnet werden kann, ermöglicht dabei vorteilhafterweise vor der Durchführung der eigentlichen Schwenkbewegung ein kollisionsfreies, gerades Herausbewegen des Trägers aus der Lage, in der er sich im zusammengeklappten Zustand befindet. Die eigentliche Schwenkbewegung kann dann anschließend durch den mindestens einen Freiheitsgrad für die schwenkende, rotatorische Bewegung erfolgen. Dadurch wird es erfindungsgemäß möglich, die Achse, um welche die Schwenkbewegung erfolgt, nicht - wie bei dem oben erwähnten bekannten System - fest an einer Außenkante eines das Basisteil bildenden Gehäuses, und vorzugsweise auch nicht an der Außenkante des Rasterrahmens, also des Trägers zu lagern, sondern zu ihrem Wirksamwerden in einen Abstand zum Basisteil zu bringen, was wiederum zu einer vorteilhaften Minimierung des erforderlichen Bauraums führt.

In einer Ausführung der Erfindung kann mit Vorteil auch vorgesehen sein, dass der Träger an der Schwenkeinrichtung über vier Freiheitsgrade der Bewegung verfügt, und zwar über zwei Freiheitsgrade hinsichtlich einer translatorischen Bewegung des Trägers gegenüber dem Basisteil und über zwei Freiheitsgrade hinsichtlich einer Schwenkbewegung des Trägers gegenüber dem Basisteil. Die Schwenkeinrichtung kann dazu bevorzugt als ein einerseits am Träger und andererseits am Basisteil jeweils drehbar angelenkter Scharnierbügel ausgebildet sein. Die beiden Freiheitsgrade für die Schwenkbewegung des Trägers können dabei einerseits durch die Anlenkung des Trägers am Scharnierbügel und andererseits durch die Anlenkung des Scharnierbügels am Basisteil gewährleistet werden.

Bei Vorliegen von nur zwei Freiheitsgraden kann die Schwenkeinrichtung im Rahmen der Erfindung in bevorzugter Ausführung als ein Gelenkstift ausgebildet sein. Ein derartiger Gelenkstift kann dabei vorzugsweise dazu eingesetzt werden, um den Träger in einem Briefkastensystem zunächst gerade nach vorn, also zur Schau- bzw. Einwurfseite hin, aus einem Briefkasteninneren herauszuziehen, um ihn danach weiter nach vorn in die Position klappen zu können, in der die Rückseiten der Funktionseinheiten besser erreichbar sind.

Dazu kann in dem Gelenkstift ein vorderer Stiftteil fest mit dem Träger für die Funktionseinheiten verbunden sein, wobei der Stiftteil gleitend in einer Führungshülse am Basisteil gelagert ist. Zum Ausklappen wird der fest am Gelenkstift befestigte Träger so weit nach vorne gezogen, bis ein Anschlagteil des Stiftteils hinten an der Führungshülse anschlägt. In dieser Position wird der Stiftteil von der Führungshülse freigegeben und der Träger kann nach vorn geschwenkt werden. Dabei wird vorzugsweise mittels Federdruck ein Sperrhaken nach oben gedrückt, der verhindert, dass der Stiftteil während der Arbeiten am Träger, wie bei einer Bestückung des Trägers mit Funktionseinheiten, einer Entnahme von Funktionseinheiten und/oder deren Verkabelung, unbeabsichtigt wieder ins System, also z. B. ins Briefkasteninnere, hineinrutscht. Nach Beendigung der Arbeiten am Träger kann zum Zusammenklappen dann ein Betätigungssteg des Stiftteils den Sperrhaken wieder zurück in die Führungshülse drücken, so dass der Schiebefreiheitsgrad wieder freigegeben wird und der Träger vollständig an das Basisteil herangeschoben und mit diesem verriegelt werden kann.

Sowohl in der vorstehend genannten Ausführung der Erfindung mit zwei Freiheitsgraden hinsichtlich einer translatorischen Bewegung des Trägers und zwei Freiheitsgraden hinsichtlich einer Schwenkbewegung des Trägers, wie der Ausführung mit Scharnierbügel, als auch in der vorstehend exemplarisch genannten Ausführung der Erfindung als Gelenkstift mit nur einem Freiheitsgrad hinsichtlich einer translatorischen Bewegung des Trägers und nur einem Freiheitsgrad hinsichtlich der Schwenkbewegung des Trägers sind Mittel vorgesehen, welche in verschiedenen Phasen der Überführung der Schwenkeinrichtung aus dem zusammengeklappten Zustand in den ausgeklappten Zustand mindestens einen dieser Freiheitsgrade individuell blockieren, also zu einer Unfreiheit machen. Die Schwenkeinrichtung und/oder der Träger umfasst also Mittel, die während der Bewegung des Trägers aus dem zusammengeklappten Zustand in den ausgeklappten Zustand - und auch während der Bewegung des Trägers aus dem ausgeklappten Zustand in den zusammengeklappten Zustand - sukzessiv einen oder mehrere der Freiheitsgrade individuell blockieren bzw. wieder freigeben.

Weitere vorteilhafte Ausführungen der Erfindung sind in den Unteransprüchen enthalten, wobei die Merkmale der einzelnen Unteransprüche unabhängig von den Merkmalen der anderen Unteransprüche für die vorliegende Erfindung wesentlich und zweckmäßig sind.

Anhand der in den beiliegenden Zeichnungen dargestellten, bevorzugten Ausführungsbeispiele wird die Erfindung genauer erläutert werden. Dabei zeigen:
- Fig. 1a bis 1d: vier schematische Querschnittsdarstellungen einer ersten Ausführung eines erfindungsgemäßen Montagesystems zur Veranschaulichung des Bewegungsablaufs aus einem zusammengeklappten Zustand eines Trägers des Systems für Funktionseinheiten in einen ausgeklappten Zustand,
- Fig. 2: eine perspektivische Ansicht auf die Vorderseite einer ersten Ausführung eines erfindungsgemäßen Montagesystems, in einem geöffneten Zustand,
- Fig. 3: in perspektivischer Darstellung, eine in der Ebene der Linie III-III in Fig. 2 geschnittene Teilansicht der in Fig. 2 dargestellten ersten Ausführung eines erfindungsgemäßen Montagesystems,
- Fig. 4: einen Ausschnitt aus einer Seitenansicht der in Fig. 2 und 3 dargestellten ersten Ausführung eines erfindungsgemäßen Montagesystems in einem Fig. 1 a entsprechenden zusammengeklappten Zustand,
- Fig. 5: einen Ausschnitt aus einer Seitenansicht der ersten Ausführung eines erfindungsgemäßen Montagesystems in einem Fig. 1b entsprechenden Zustand,
- Fig. 6: einen Ausschnitt aus einer Seitenansicht der ersten Ausführung eines erfindungsgemäßen Montagesystems in einem Fig. 1c entsprechenden Zustand,
- Fig. 7: einen Ausschnitt aus einer Seitenansicht der ersten Ausführung eines erfindungsgemäßen Montagesystems mit einem etwas weiter als in Fig. 6 ausgeschwenkten Träger für Funktionseinheiten,
- Fig. 8: einen Ausschnitt aus einer Seitenansicht der ersten Ausführung eines erfindungsgemäßen Montagesystems in einem Fig. 1d entsprechenden ausgeklappten Zustand,
- Fig. 9: eine vollständige Seitenansicht der in Fig. 8 dargestellten ersten Ausführung eines erfindungsgemäßen Montagesystems in ausgeklappten Zustand,
- Fig. 10: eine perspektivische Ansicht der ersten Ausführung eines erfindungsgemäßen Montagesystems in einem Fig. 1d entsprechenden ausgeklappten Zustand,
- Fig. 11: eine vergrößerte Darstellung der in Fig. 10 mit XI bezeichneten Einzelheit,
- Fig. 12: einen Längsschnitt einer Schwenkeinrichtung einer zweiten Ausführung eines erfindungsgemäßen Montagesystems in zusammengeklapptem Zustand,
- Fig. 13: eine perspektivische Ansicht der zweiten Ausführung eines erfindungsgemäßen Montagesystems in zusammengeklapptem Zustand,
- Fig. 14: eine seitliche Schnittdarstellung der in Fig. 13 gezeigten zweiten Ausführung eines erfindungsgemäßen Montagesystems mit der Schwenkeinrichtung gemäß Fig. 12 in einem Zwischenzustand ähnlich wie in Fig. 1b,
- Fig. 15: eine perspektivische Ansicht zu Fig. 14,
- Fig. 16: eine perspektivische Ansicht zu Fig. 17,
- Fig. 17: eine seitliche Schnittdarstellung der in Fig. 13 gezeigten zweiten Ausführung eines erfindungsgemäßen Montagesystems mit der Schwenkeinrichtung gemäß Fig. 12 in einem ausgeklappten Zwischenzustand ähnlich wie in Fig. 1c,
- Fig. 18: eine seitliche Schnittdarstellung der in Fig. 13 gezeigten zweiten Ausführung eines erfindungsgemäßen Montagesystems mit der Schwenkeinrichtung gemäß Fig. 12 in einem vollständig ausgeklappten Zustand ähnlich wie in Fig. 1d,
- Fig. 19: eine perspektivische Ansicht zu Fig. 18, wobei die durch die Linie XIV gehende Ebene die Schnittebene darstellt, durch die die Schnitte in Fig. 14, 17 und 18 gelegt sind,
- Fig. 20: eine Seitenansicht eines Details der Schwenkeinrichtung der zweiten Ausführung eines erfindungsgemäßen Montagesystems in seinem vollständig ausgeklappten Zustand.

Zu der anschließenden Beschreibung wird ausdrücklich betont, dass die Erfindung nicht auf die Ausführungsbeispiele und dabei auch nicht auf alle oder mehrere Merkmale von beschriebenen Merkmalskombinationen beschränkt ist, vielmehr kann jedes einzelne Teilmerkmal jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

In den verschiedenen Figuren der Zeichnung sind gleiche bzw. einander entsprechende Teile stets mit den gleichen Bezugszeichen versehen und werden daher im Folgenden in der Regel jeweils auch nur einmal beschrieben. Lediglich für die Schwenkeinrichtung wird einmal das Bezugszeichen 4 verwendet, wenn sie als Scharnierbügel ausgebildet ist, und einmal das Bezugszeichen 40, wenn sie als Gelenkstift ausgebildet ist.

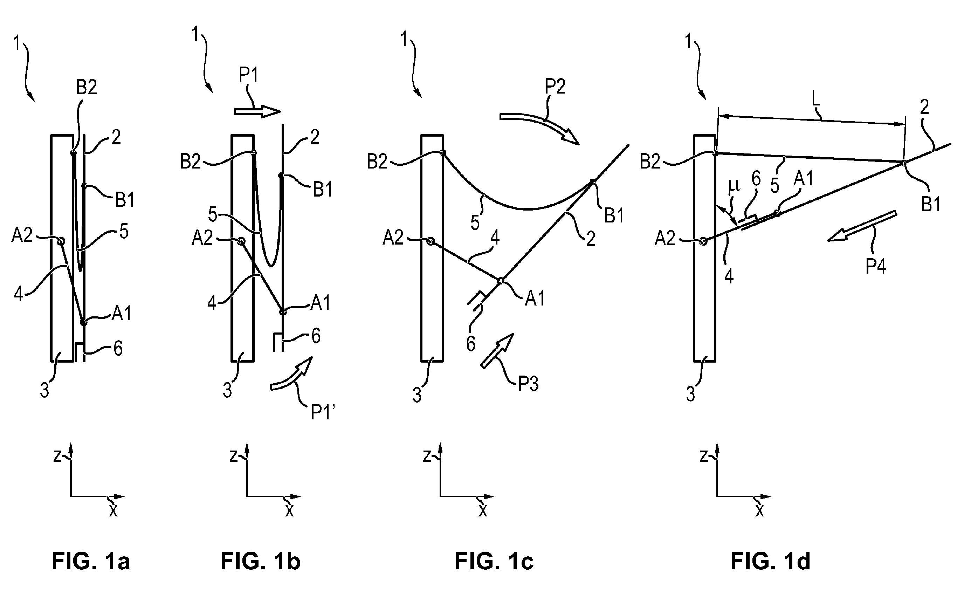

Wie in Fig. 1a bis 1d exemplarisch in schematischer Weise dargestellt ist, umfasst ein erfindungsgemäßes Montagesystem 1 einen Träger 2 für Funktionseinheiten, welcher an einem Basisteil 3 gelagert ist. Die Lagerung ist gelenkig, wobei dazu eine Schwenkeinrichtung 4 vorgesehen ist, mittels derer das erfindungsgemäße Montagesystem 1 aus dem in Fig. 1 a dargestellten zusammengeklappten Zustand, der einen Zustand der Endmontage darstellt, in den in Fig. 1d dargestellten, ausgeklappten Zustand bewegbar ist, der sowohl von einer Seite des Trägers 2, die in der Zeichnung unten liegt, als auch insbesondere von einer Seite, die in der Zeichnung oben liegt, eine einfache Zugriffmöglichkeit auf den Träger 2 bietet.

Die in Fig. 1b und 1c dargestellten Ansichten zeigen Zwischenzustände der Bewegung des Systems 1.

Die Schwenkeinrichtung 4 ist in der dargestellten ersten Ausführung als ein einerseits am Träger 2 (bewegliche Anlenkung A1) und andererseits am Basisteil 3 (ortsfeste Anlenkung A2) angelenkter Scharnierbügel 4 ausgebildet.

Außerdem ist ein Fangseil 5 für den Träger 2 vorgesehen, das einerseits am Träger 2 im Befestigungspunkt B1 und andererseits am Basisteil 3 im Befestigungspunkt B2 befestigt ist.

In dieser Ausführung der Erfindung verfügt der Träger 2 an der Schwenkeinrichtung 4 über insgesamt vier Freiheitsgrade, und zwar über zwei Freiheitsgrade hinsichtlich einer translatorischen Bewegung des Trägers 2 gegenüber dem Basisteil 3 und über zwei Freiheitsgrade hinsichtlich einer Schwenkbewegung des Trägers 2 gegenüber dem Basisteil 3. Die beiden Freiheitsgrade für die Schwenkbewegung des Trägers 2 (Pfeil P1' in Fig. 1b, Pfeil P2 in Fig. 1 c) können dabei einerseits durch die Anlenkung A1 des Trägers 2 am Scharnierbügel 4 und andererseits durch die Anlenkung A2 des Scharnierbügels 4 am Basisteil 3 gewährleistet werden.

Zum Aufklappen kann aufgrund der Anlenkung A2 des Scharnierbügels 4 am Basisteil 3 die translatorische Bewegung (Pfeil P1 in Fig. 1 b) zunächst allein und dann aufgrund der Anlenkung A1 des Scharnierbügels 4 am Träger 2 gemeinsam mit der Schwenkbewegung des Trägers 2 gegenüber dem Basisteil 3 (Pfeil P1' in Fig. 1b, Pfeil P2 in Fig. 1 c) erfolgen. Hierbei ist nicht nur eine Verschiebebewegung senkrecht zur Erstreckungsebene des Basisteils 3 (Pfeil P1) in x-Richtung möglich, sondern auch eine gleichzeitige laterale Verschiebung parallel zur Erstreckungsebene des Basisteils 3 in z-Richtung, so dass daraus in der x-z-Ebene eine Verschiebung mit zwei Freiheitsgraden der Bewegung resultiert, wie sie durch den Pfeil P3 in Fig. 1c und den Pfeil P4 in Fig. 1d veranschaulicht wird.

In der in Fig. 1d gezeigten Lage, in welcher die Erstreckungsebene des Trägers 2 parallel zu der des Scharnierbügels 4 liegt, kann dann ein Freiheitsgrad festgelegt und zu einer Unfreiheit werden, indem eine weitere Schwenkbewegung (Pfeil 2) des Trägers 2 gegenüber dem Scharnierbügel 4 blockiert wird und somit entfällt. In dieser schon aufgeklappten Lage erlaubt die Schwenkeinrichtung 4 zunächst noch aufgrund einer endseitigen Ausbildung des Scharnierbügels 4 nicht nur als Drehsondern auch als Schiebelager 6, in dem der Träger 2 dann festlegbar ist, ein Schieben des Trägers 2 relativ zum Scharnierbügel 4 in der Erstreckungsebene des Trägers 2 bzw. in Längsrichtung des Scharnierbügels 4 (Pfeil P4) und zunächst auch noch eine Schwenkbewegung (Pfeil P2) der nunmehr starren Einheit von Träger 2 und Scharnierbügel 4 um die Achse, die durch den Anlenkung A2 des Scharnierbügels 4 am Basisteil 3 bestimmt ist. Wenn durch diese, insbesondere durch die Schwerkraft des Trägers 2 bewirkte Schwenkbewegung (Pfeil P2) der gewünschte Winkel p zwischen dem Träger 2 und dem Basisteil 3 erreicht ist, kann diese Endlage gegen die Schwerkraft, beispielsweise bevorzugt durch das entsprechend bemessene Fangseil 5, fixiert werden, welches dann gespannt ist.

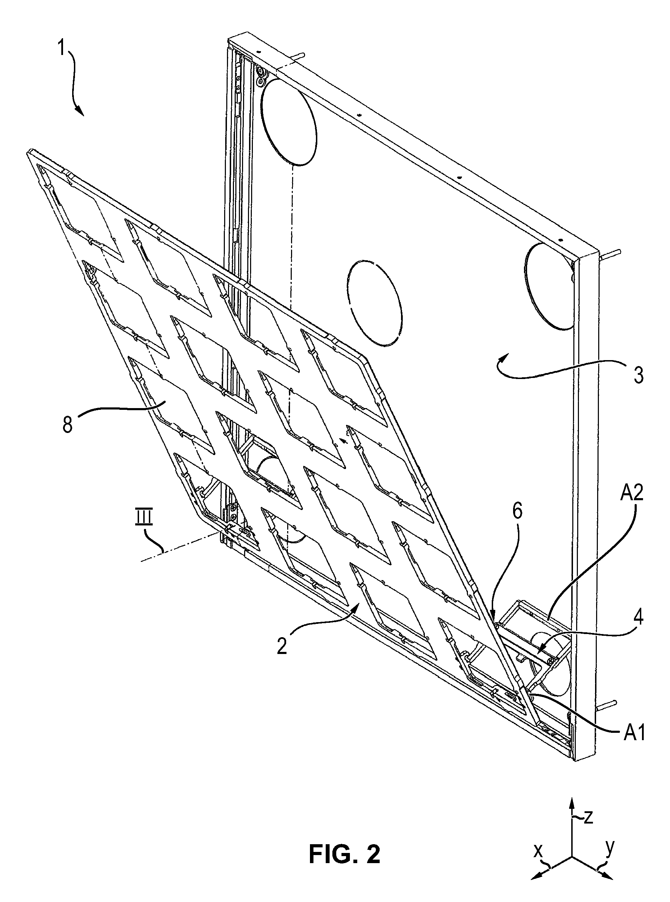

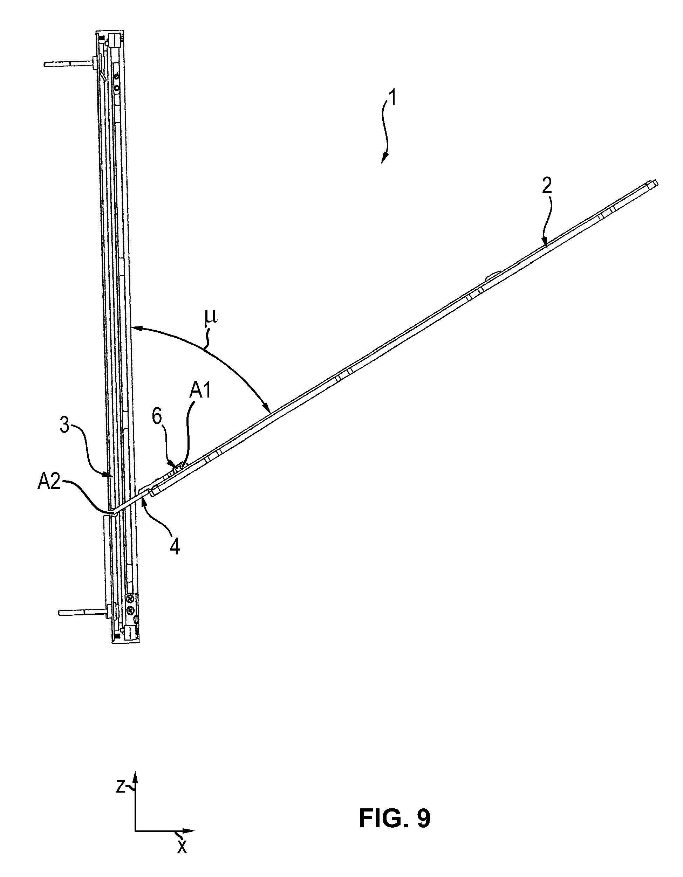

Fig. 2 bis 11 zeigen die in Fig. 1a bis 1d schematisch dargestellte erste Ausführung eines erfindungsgemäßen Montagesystems in einer konkreten Ausführungsform.

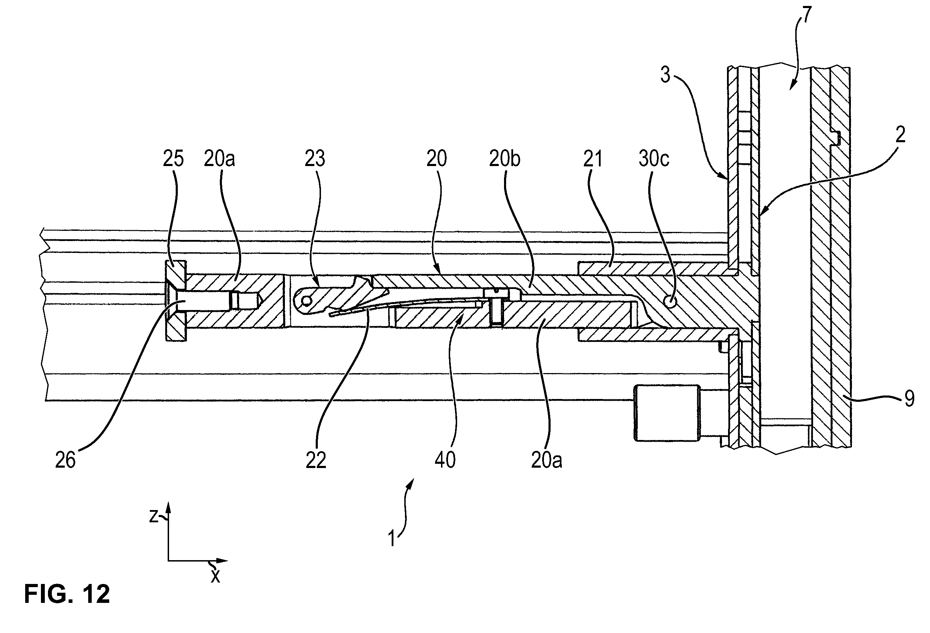

Fig. 12 bis 19 zeigen eine zweite Ausführung eines erfindungsgemäßen Montagesystems in konkreter Ausführungsform, die nicht schematisch dargestellt ist.

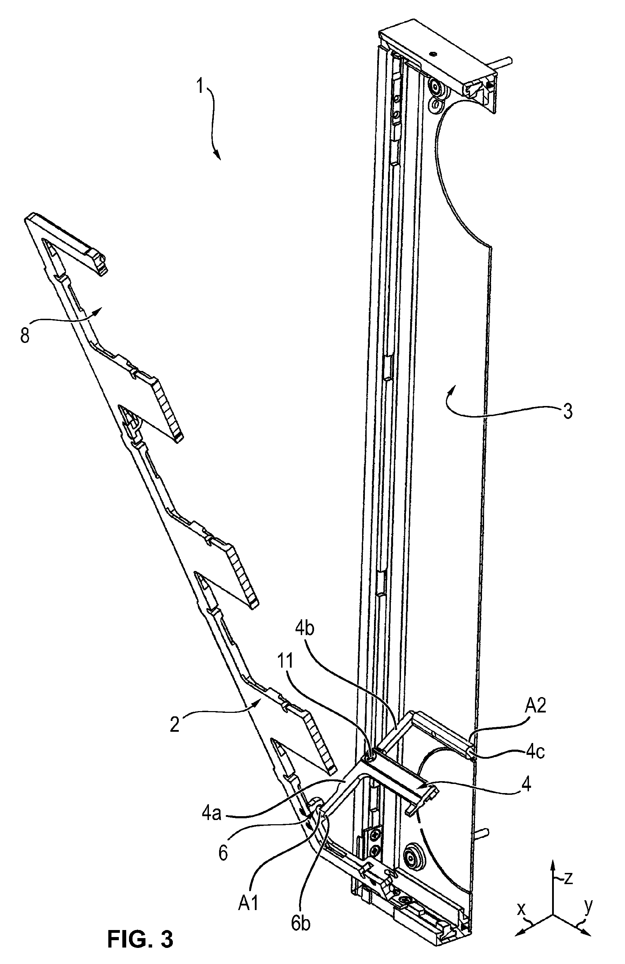

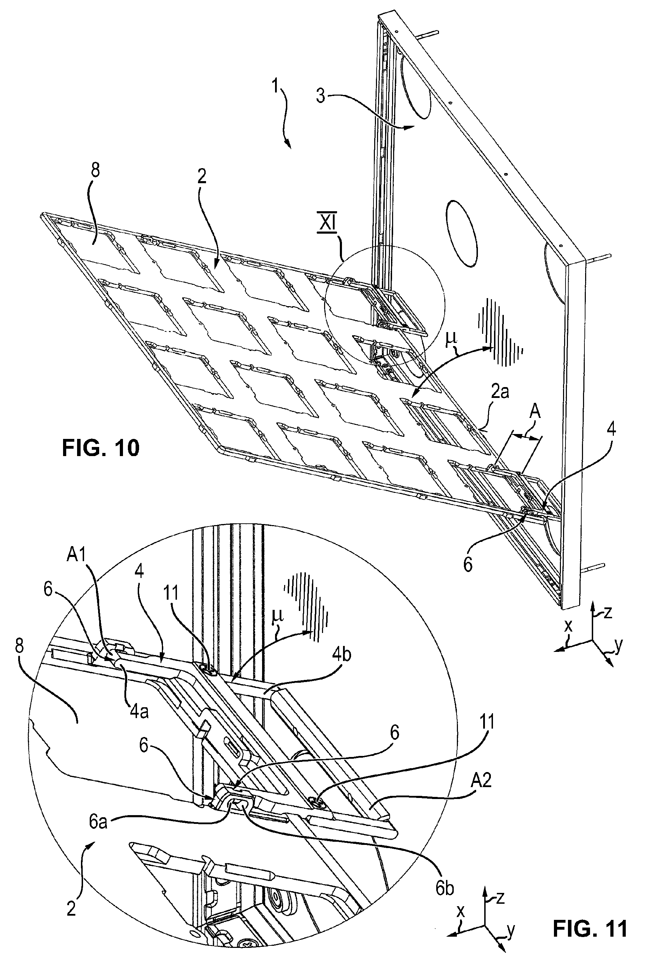

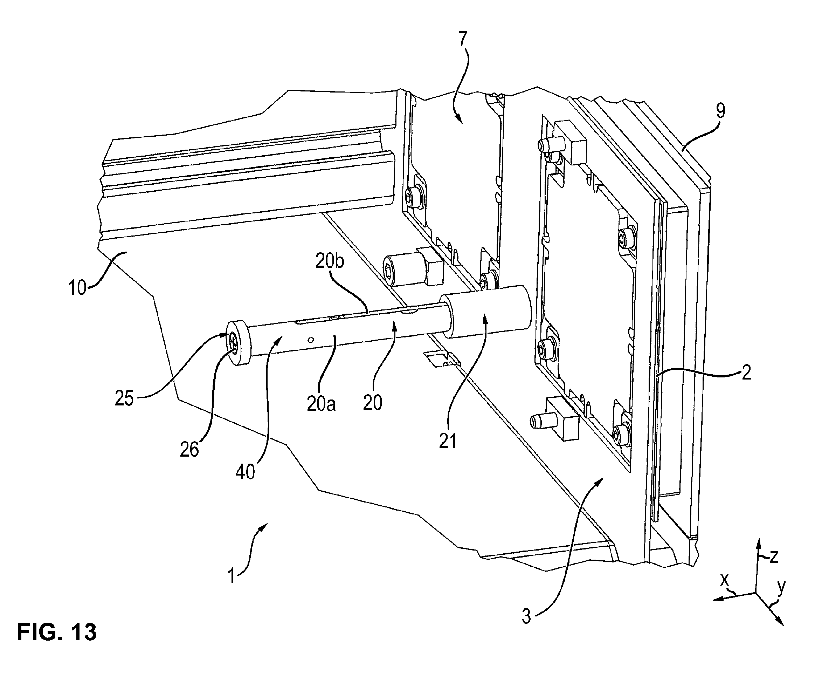

Wie zunächst Fig. 2 und 3, aber auch Fig. 10 besonders deutlich für die erste Ausführung der Erfindung und Fig. 13 sowie Fig. 15, 16 und 19 für die zweite Ausführung der Erfindung zeigen, umfasst ein erfindungsgemäßes Montagesystem 1 einen Träger 2 für Funktionseinheiten 7.

Die Funktionseinheiten 7 sind nur in der Zeichnung (Fig. 12 bis 19) für die zweite Ausführung der Erfindung dargestellt. Die auf die erste Ausführung bezogene Zeichnung (Fig. 2 bis 11) zeigt nur die entsprechenden Aufnahmeöffnungen 8 für die Funktionseinheiten 7 im Träger 2. Auch zeigt sie das in Fig. 1a bis 1d dargestellte Fangseil 5 nicht. Die Aufnahmeöffnungen 8 sind wiederum in der zweiten Ausführung nicht näher mit einem Bezugszeichen bezeichnet.

Vorzugsweise weist der Träger 2 - wie dargestellt - eine oder mehrere durch Stege getrennte, gleich große Öffnungen 8 auf, um Funktionseinheiten 7 mit gleichen äußeren Abmessungen aufzunehmen.

Das erfindungsgemäße Montagesystem 1 kann -wie insbesondere die erste Ausführung der Erfindung zeigt - beispielsweise als Kommunikationssystem an Türen, als Kommunikations-Paneel oder-wie insbesondere die zweite Ausführung der Erfindung zeigt - beispielsweise auch an freistehenden Briefkästen zur Anwendung kommen.

Entsprechend dem Einsatzfall können die Funktionseinheiten 7 unterschiedlicher Art sein und sind jeweils in den Aufnahmeöffnungen 8, die als Ausnehmungen in dem als Platte vorliegenden Träger 2 ausgebildet sind, in einem aus Spalten und/oder Reihen bestehenden Raster festlegbar. Für das Raster können quadratische Einheitsflächen mit spezieller, auf die unterschiedlichen Arten der Ausbildung der Funktionseinheiten abgestimmter Bemessung der Grundseiten vorgegeben sein. Dadurch wird es vorteilhafterweise möglich, als Funktionseinheiten 7 elektrische Baueinheiten, wie Schalter, Taster, Kameras usw., zusammen mit nichtelektrischen Baueinheiten, wie insbesondere Briefkästen, in dem erfindungsgemäßen Montagesystem 1 zu montieren. Auch Dekorationsplatten bzw. Auflageblenden können als Funktionseinheiten 7 allein oder - wie für die zweite Ausführung dargestellt - als Auflagen 9 der Funktionseinheiten 7 vorgesehen sein.

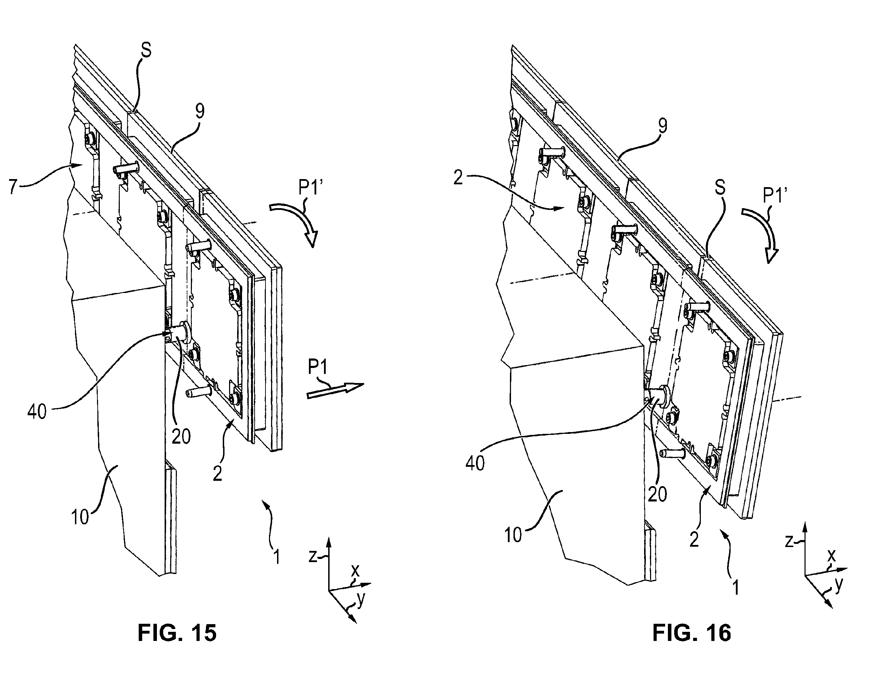

Das derart modular aufgebaute erfindungsgemäße Montagesystem 1 kann somit in Baukastenbauweise ausgeführt werden, wobei eine flexible Gestaltung der Anordnung der Funktionselemente 7 und ein Design mit ästhetischem Erscheinungsbild möglich ist. Es eignet sich - wie auch das eingangs genannte bekannte System - auch zum Einbau in ein eine Systemfront einfassendes Gehäuse (Bezugszeichen 10 in der zweiten Ausführung) oder - ohne Gehäuse - zur rahmenlosen Montage bei Unterputz, Aufputz, Mauereinbau oder Kommunikationssäulen oder als eine bauseitige Frontplatte. Dabei können die einzelnen Funktionsmodule 7 mit ihren zugehörigen Funktionsblenden (Auflagen 9) in dem gemeinsamen Träger 2 derart befestigt werden, dass sie exakt zueinander ausgerichtet sind, wobei zwischen den einzelnen Funktionsblenden ein genaues, optimal sehr kleines Spaltbreitenmaß S (Fig. 15, 16) eingehalten werden kann. Aus dem Stand der Technik bekannte Verblendleisten sind so vorteilhafterweise überflüssig.

Der Träger 2, welcher auch als Rasterrahmen für die Funktionseinheiten 7 bezeichnet werden könnte, welcher jedoch die Funktionseinheiten 7 außenseitig nicht umfasst, ist gelenkig mit einem Basisteil 3 verbunden. Zur Verbindung dient eine Schwenkeinrichtung 4 für den Träger 2, die in den beiden Ausführungsbeispielen jeweils unterschiedlich ausgeführt ist. Bei der ersten Ausführung der Erfindung ist - wie bereits erwähnt - die Schwenkeinrichtung 4 als ein einerseits beweglich am Träger 2 (Anlenkung A1) und andererseits ortsfest am Basisteil 3 (Anlenkung A2) jeweils drehbar angelenkter Scharnierbügel 4 ausgebildet.

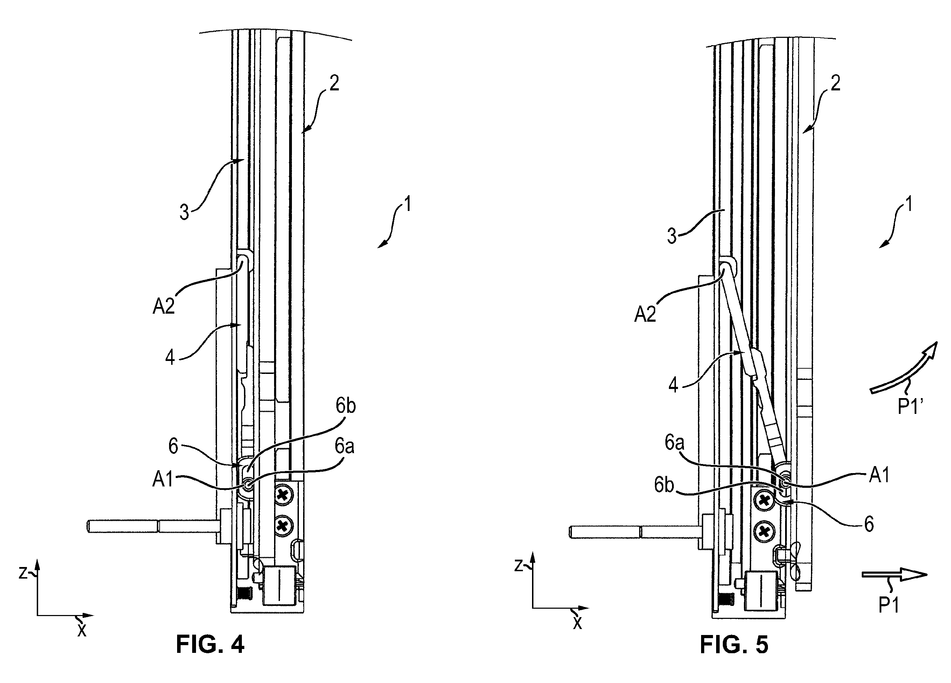

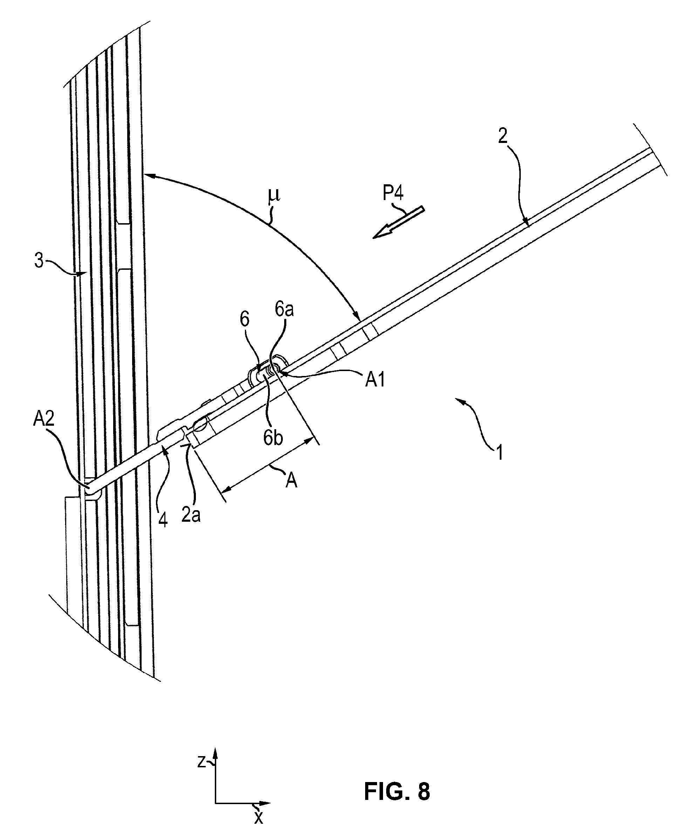

Mittels der Schwenkeinrichtung 4 kann das Montagesystem 1 aus dem für die erste Ausführung in Fig. 4 dargestellten, zusammengeklappten Zustand in den in Fig. 8 bis 11 dargestellten ausgeklappten Zustand gebracht werden.

Im zusammengeklappten Zustand (Fig. 4) liegt der Träger 2 für die Funktionseinheiten 7 flächig am Basisteil 3 an. Aus dieser Lage führt der Träger 2 zunächst eine allein translatorische Bewegung im Sinne des Pfeiles P1 in Fig. 5 senkrecht zur Erstreckungsebene von Träger 2 und Basisteil 3 (x-Richtung) aus. Der Scharnierbügel 4 wird dabei um seine Anlenkung A2 im Basisteil 3 im Sinne des Richtungspfeiles P1' verschwenkt. Die Erstreckungsebenen von Träger 2 und Basisteil 3 bleiben parallel ausgerichtet, wie Fig. 5 dies zeigt. Ermöglicht wird dieser Bewegungsablauf dabei dadurch, dass der Scharnierbügel 4 in seiner Anlenkung A1 am Träger 2 einendig als Dreh-Schiebe-Lager 6 ausgebildet ist, indem insbesondere ein Scharnierzapfen 6a des Bügels 4 in einem Langloch 6b Lagers 6 gleitet.

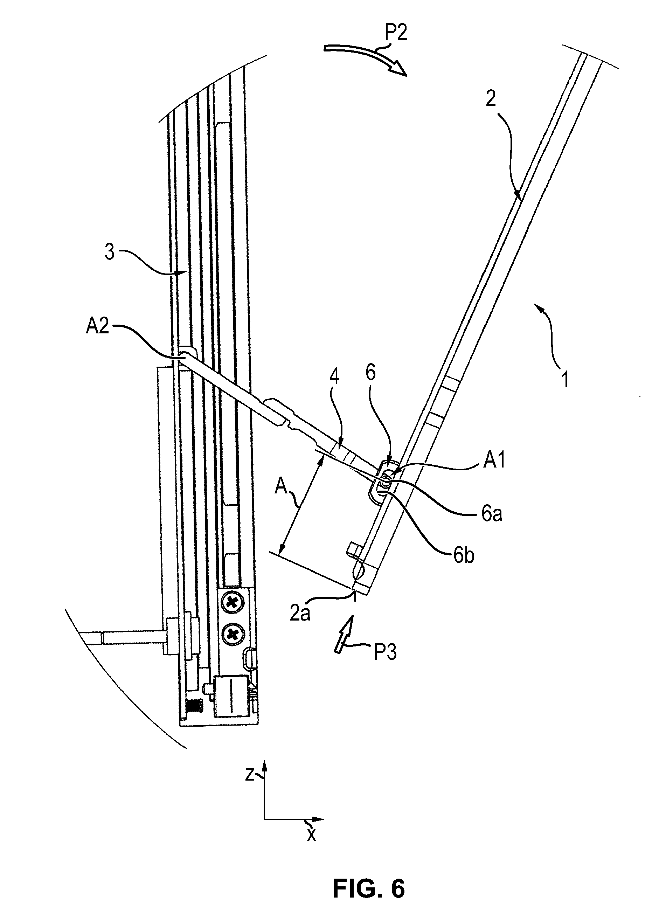

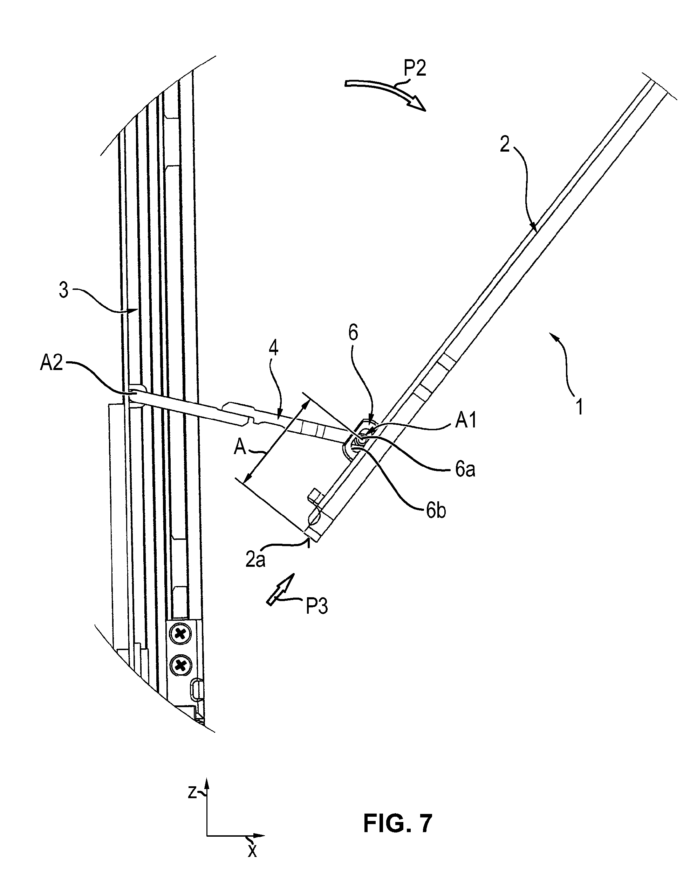

Zum weiteren Aufklappen kann der Scharnierbügel 4 aus der in Fig. 5 gezeigten Lage nun aufgrund der Anlenkung A2 am Basisteil 3 weiterhin eine Schwenkbewegung im Sinne des Pfeiles P1 ausführen. Gleichzeitig ist wegen des Dreh-Schiebe-Lagers 6 eine weitere Schwenkbewegung um die Anlenkung A1 am Träger 2 im Sinne des Pfeiles P2 und eine translatorische Bewegung in einer z-x-Ebene im Sinne des Pfeiles P3 in Fig. 6 und Fig. 7 möglich.

Sobald der Träger 2 oberseitig jedoch durch die Schwenkbewegung im Sinne des Pfeiles P2 am Scharnierbügel 4 zur Anlage kommt, weil der Scharnierbügel 4 in seiner Anlenkung A1 am Träger 2 mit Abstand A (Fig. 6, 7, 8, 10) zum Trägerrand 2a angelenkt ist, also die entsprechende Schwenkachse nicht durch den Rand 2a, sondern parallel dazu verläuft, ist eine weitere Schwenkbewegung des Trägers 2 um diese seine Anlenkung A1 gehemmt, wie dies Fig. 8 bis 11 zeigen. Die Erstreckungsebene des Trägers 2 liegt dabei parallel zu der des Scharnierbügels 4. Das Dreh-Schiebe-Lager 6 erlaubt noch ein Schieben des Trägers 2 relativ zum Scharnierbügel 4 in der x-z-Erstreckungsebene des Trägers 2 bzw. in Längsrichtung des Scharnierbügels 4 (Pfeil P4) bis der Scharnierzapfen 6a im Langloch 6b zur Anlage kommt, wie dies insbesondere Fig. 8 in deutlicher Weise veranschaulicht. Danach kann durch das Fangseil 5 auch die Schwenkbewegung (Pfeil P2) der nunmehr starren Einheit von Träger 2 und Scharnierbügel 4 um die Anlenkung A2 des Scharnierbügels 4 am Basisteil 3 unterbunden werden. Durch eine Länge L (Fig. 1 d) des Fangseils 5 kann dabei der gewünschte Winkel p zwischen dem Träger 2 und dem Basisteil 3 bestimmt werden. Dieser kann je nach Montageanforderung im Bereich von 60° bis 120°, insbesondere im Bereich von 70° bis 90°, liegen. Je größer der Winkel p ist, desto besser sind die Rückseiten der Funktionseinheiten 7 erreichbar, wobei der Winkel p so gewählt werden kann, dass bedarfsweise auch die Vorderseiten der Funktionseinheiten 7 noch gut zugänglich sind. Als optimaler Winkelwert werden unter diesem Gesichtspunkt 70° angesehen.

Die Erfindung ist nicht auf die dargestellten Ausführungsbeispiele beschränkt, sondern der Fachmann kann diese bedarfsweise durch weitere zweckmäßige technische Maßnahmen ergänzen, ohne dass der Rahmen der Erfindung verlassen wird. So kann zum Beispiel vorgesehen sein, dass, wie dies insbesondere Fig. 11 zeigt, der Scharnierbügel 4 in vorteilhafter symmetrischer Ausführung insbesondere H-förmig ausgebildet sein kann, wobei er vorzugsweise beidseitig ein Dreh-Schiebe-Lager 6 für den Träger 2 aufweist.

Auch kann der Scharnierbügel 4 in vorteilhafter Weise aus zwei Teilen 4a, 4b bestehen, die fest, vorzugsweise durch eine Verbindung mit Schrauben 11 (Fig. 3, Fig. 11), miteinander verbindbar sind. Möglich wäre allerdings auch eine andere Verbindungsart, wie z. B. ein Verrasten. So kann in montagetechnisch einfacher Weise ein Teil 4a des Scharnierbügels 4 am Träger 2 - beispielsweise durch Verschrauben von Bügel 4 und Träger 2 - und der andere Teil 4b am Basisteil 3 vormontiert werden, wobei dann zur Erstmontage des Bügels 4 die beiden Teile 4a, 4b miteinander verbunden werden. Die am Basisteil 3 vorgesehene Anlenkung A2 kann - wie dies insbesondere Fig. 3 zeigt - ebenfalls über Scharnierzapfen oder über einen durchgängigen Scharnierstift 4c realisiert werden, der in einer mit dem Basisteil 3 - beispielsweise ebenfalls über Schrauben - fest verbindbaren Scharnierhülse 4d gelagert ist.

Pro Träger 2 können ein oder mehrere, insbesondere zwei Scharnierbügel 4, zur Verbindung mit einem Basisteil 3 vorgesehen sein.

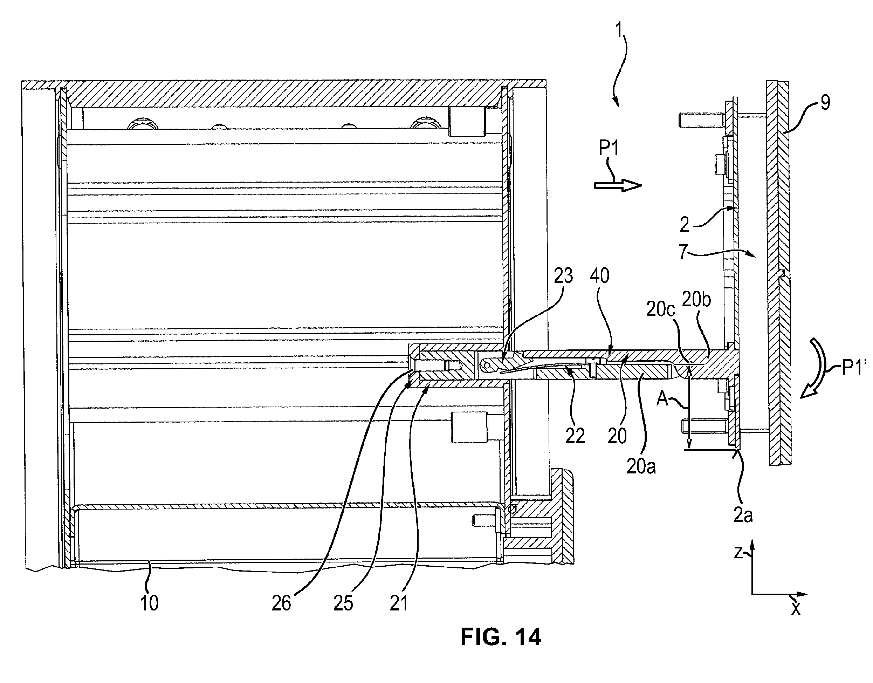

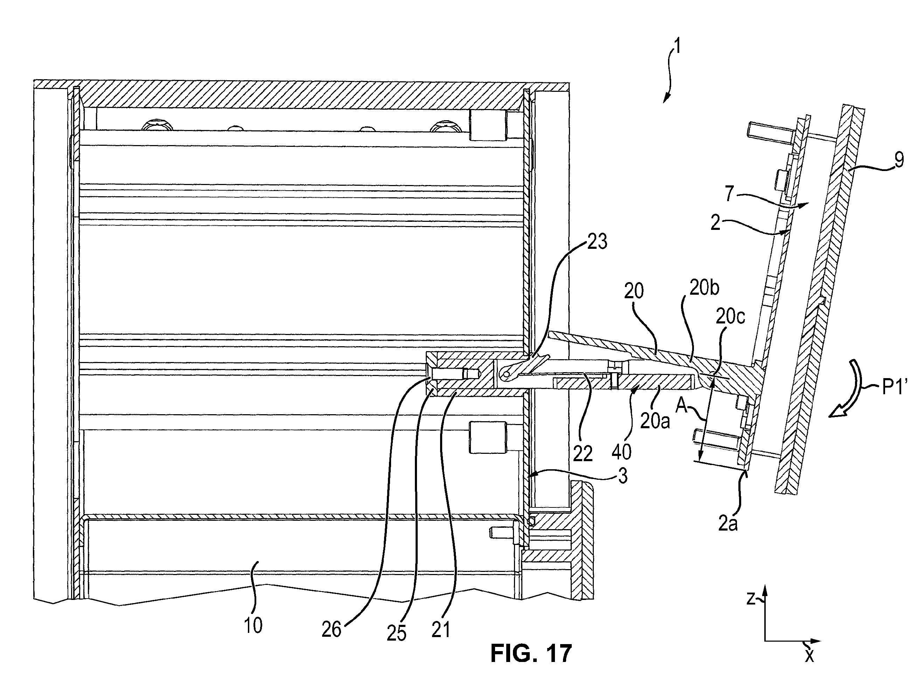

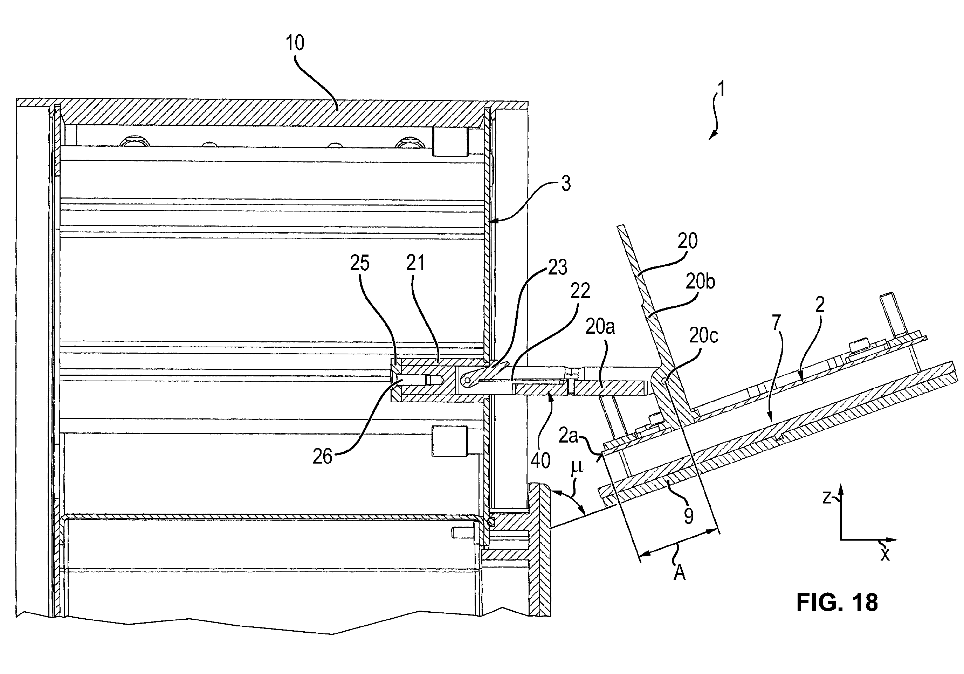

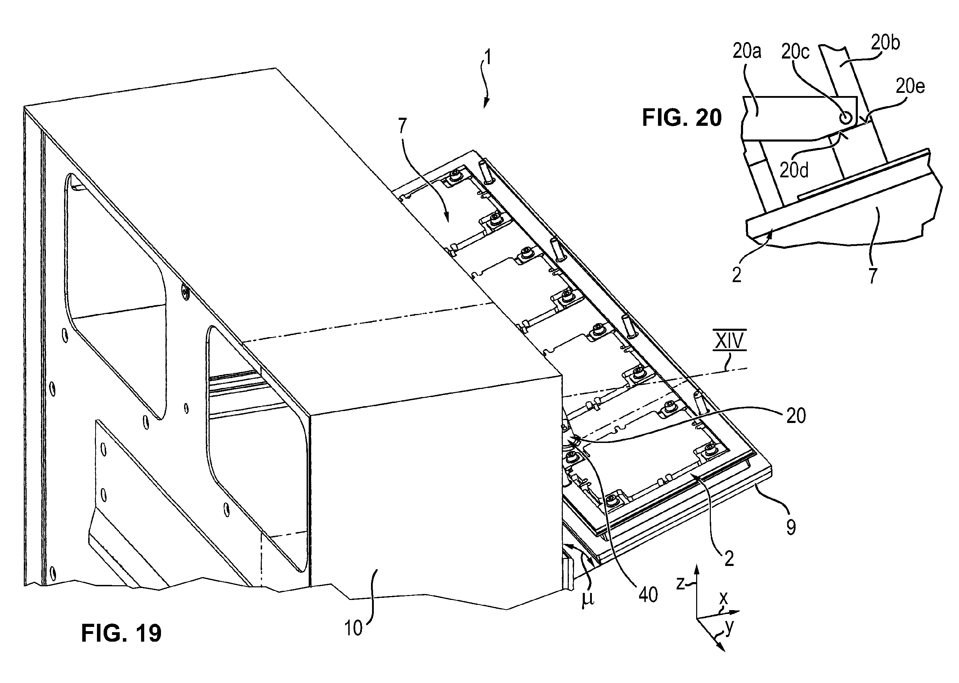

Wie bereits erwähnt, ist in der in Fig. 12 bis 19 dargestellten zweiten Ausführung eines erfindungsgemäßen Montagesystems 1 die Schwenkeinrichtung als Gelenkstift 40 ausgeführt. Grundsätzlich wird dabei die Bewegung aus dem zusammengeklappten Zustand (Fig. 12, Fig. 13) in den ausgeklappten Zustand gleichartig wie bei der ersten Ausführung realisiert, indem der Träger 2 für die Funktionseinheiten 7 zunächst orthogonal zur Ebene des Basisteils 3 verschoben (Fig. 14, Fig. 15) und dann über Zwischenpositionen (Fig. 16, Fig. 17) in die gewünschte Winkelposition µ (Fig. 18, Fig. 19) verschwenkt wird. Hierbei kann jedoch in gegenüber der ersten Ausführung vereinfachter Weise eine Superposition von Verschiebe- und Verschwenk-Bewegung vermieden werden. Das heißt, dass der Bewegungsablauf einfacher als bei der ersten Ausführung der Erfindung ist.

Wie zunächst in Fig. 12 der Längsschnitt durch den Gelenkstift 40 der zweiten bevorzugten Ausführung eines erfindungsgemäßen Montagesystems 1 zeigt, umfasst dieser folgende Teile:
- ein Stiftteil 20, das in einer am Basisteil 3 befestigten Führungshülse 21 verschiebbar gleitgeführt ist,
- einen unter der Spannung einer Feder 22 stehenden Sperrhaken 23 für das Stiftteil 20, welcher im zusammengeklappten Zustand durch einen rückseitigen Anschlag des Stiftteils 20 am Sperrhaken 23 die Verschiebebewegung des Stiftteils 20 in x-Richtung einseitig - in Richtung auf das Systeminnere hin - hemmt,
- sowie ein endseitig am Stiftteil 20 angeordnetes Anschlagteil 25 für die Führungshülse 21.

Das Anschlagteil 25 kann, wie dargestellt, mittels einer Schraube 26 am Stiftteil 20 befestigt sein.

Das verschiebbare Stiftteil 20 ist zweiteilig ausgeführt und umfasst ein gegenüber der Führungshülse 21 nicht verschwenkbares erstes Stiftelement 20a und ein gegenüber dem ersten Stiftelement 20a und der Führungshülse 21 verschwenkbares zweites Stiftelement 20b. Zur Gewährleistung der Verschwenkbarkeit sind die beiden Stiftelemente 20a, 20b über ein Gelenk 20c miteinander verbunden.

Der Träger 2 der erfindungsgemäßen Montageeinrichtung 1 ist - im Gegensatz zur ersten Ausführung - hier nicht gelenkig, sondern ortsfest mit dem Gelenkstift 40, und zwar mit dessen verschwenkbarem Stiftelement 20b, verbunden. Das Basisteil 3 ist fest in einem Gehäuse 10 gehalten.

In der in Fig. 12 und 13 dargestellten Grundstellung - also nach einer Fertigmontage des erfindungsgemäßen Montagesystems 1 - liegt der bestückte Träger 2 mit den in ihm gehaltenen Funktionseinheiten 7 flächig am Basisteil 3 an.

Zum Ausklappen wird der am Gelenkstift 40 befestigte Träger 2 so weit nach vorn, also zur Schau- bzw. Einwurfseite hin, gezogen, bis das Anschlagteil 25 hinten, im Systeminneren, an der Führungshülse 21 anschlägt. Diese Position ist in Fig. 14 und 15 dargestellt. Die Länge des verschwenkbaren Stiftelements 20b ist derart bemessen, dass in dieser Position das verschwenkbare Stiftelement 20b des Stiftteils 20 von der Führungshülse 21 freigegeben wird. Es befindet sich also vollständig außerhalb der Führungshülse 21, so dass das Stiftelement 20b mit dem Träger 2 um die Achse des Gelenks 20c nach vorn geschwenkt werden kann. Diese Position ist in Fig. 16 und 17 dargestellt.

Dabei wird vorzugsweise mittels des Drucks der Feder 22, bei der es sich bevorzugt um eine Blattfeder handeln kann, der Sperrhaken 23 nach oben gedrückt, wobei er mit dem Basisteil 3 verhakt, so dass das Stiftteil 20 während der Arbeiten am Träger 2 nicht ins Innere des erfindungsgemäßen Montagesystems 1 hineinrutscht, bei dem es sich hier, wie durch die Form des Gehäuses 10 veranschaulicht wird, um ein System mit Briefkästen handelt.

Durch ein weiteres Verschwenken des am Stiftelement 20b befestigten Trägers 2 wird dann die gewünschte, in Fig. 18 und 19 dargestellte Winkelstellung p erreicht. Auch hier verläuft beim Verschwenken die entsprechende Schwenkachse bzw. deren Projektion auf den Träger 2 nicht durch den Rand 2a des Trägers 2, sondern parallel im Abstand A dazu.

Diese Position kann dadurch gesichert werden, dass - wie in Fig. 20 dargestellt - durch einander komplementäre Anschlagflächen 20d, 20e der Stiftelemente 20a, 20b des Stiftteils 20 die Schwenkbewegung begrenzt wird.

Diese Anschlagflächen 20d, 20e stellen somit - wie z. B. bei der ersten Ausführung der Schwenkeinrichtung 4, 40 das Fangseil 5 und das Dreh-Schiebegelenk 6 - Mittel der Schwenkeinrichtung 4, 40 und/oder des Trägers 2 dar, welche während der Bewegung des Trägers 2 aus dem zusammengeklappten Zustand in den ausgeklappten Zustand und während der Bewegung des Trägers 2 aus dem ausgeklappten Zustand in den zusammengeklappten Zustand sukzessiv einen oder mehrere der insgesamt vorhandenen Freiheitsgrade individuell blockieren bzw. wieder freigeben können. Auch der Sperrhaken 23 und das Anschlagteil 25 sind derartige Mittel.

Nach Beendigung der Arbeiten am Träger 2 kann, um das erfindungsgemäße Montagesystems 1 wieder zusammenzuklappen, der Sperrhaken 23 gegen die Federkraft wieder zurück in die Führungshülse 21 gedrückt werden, so dass der Schiebefreiheitsgrad wieder freigegeben wird und der Träger 2 wieder vollständig an das Basisteil 3 herangeschoben und mit diesem verriegelt werden kann.

Pro Träger 2 können auch hier ein oder mehrere, insbesondere zwei Gelenkstifte 40, zur Verbindung mit einem Basisteil 3 vorgesehen sein.

Die Erfindung ist bislang noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich jedes Einzelmerkmal der unabhängigen Ansprüche weggelassen bzw. durch mindestens ein an anderer Stelle der Anmeldung offenbartes Einzelmerkmal ersetzt werden kann.

### Bezugszeichenliste

- 1: Montagesystem
- 2: Träger von 1
- 3: Basisteil von 1
- 4: Schwenkeinrichtung, Scharnierbügel
- 4a: erstes Teil von 4, an 2 vormontierbar
- 4b: zweites Teil von 4, an 3 vormontierbar
- 4c: Scharnierstift von 4 zur Bildung von A2
- 4d: Scharnierhülse von 4 zur Bildung von A2
- 5: Fangseil zwischen 2 und 3
- 6: Dreh-Schiebe-Lager zur Bildung von A1
- 6a: Scharnierzapfen von 4
- 6b: Langloch von 6
- 7: Funktionseinheit
- 8: Aufnahmeöffnung für 7
- 9: Auflage von 7
- 10: Gehäuse
- 11: Schraube

- 20: Stiftteil von 40
- 20a: erstes Stiftelement von 20
- 20b: zweites Stiftelement von 20
- 20c: Gelenk zur Verbindung von 20a und 20b
- 20d: Anschlagfläche von 20a (Fig. 20)
- 20e: Anschlagfläche von 20b (Fig. 20)
- 21: Führungshülse für 20 von 40
- 22: Feder, auf 23 wirkend
- 23: Sperrhaken für 20
- 25: Anschlagteil für 21
- 26: Schraube für 25 und 20a

- 40: Schwenkeinrichtung, Gelenkstift

- A: Abstand zwischen A1 und 2a
- A1: bewegliche Anlenkung von 4 an 2
- A2: ortsfeste Anlenkung von 4 an 3
- B1: Befestigungspunkt von 5 an 2
- B2: Befestigungspunkt von 5 an 3
- L: Länge von 5
- P1: Bewegungspfeil von 2 (Fig. 1b, Fig. 5)
- P1': Bewegungspfeil von 4 (Fig. 1b, Fig. 5)
- P2: Bewegungspfeil von 2 (Fig. 1c, Fig. 6 und 7, Verschwenken)
- P3: Bewegungspfeil von 2 (Fig. 1c, Fig. 6 und 7, Verschieben)
- P4: Bewegungspfeil von 2 (Fig. 1d, Fig. 8, Verschieben)
- S: Spaltmaß zwischen Auflagen 9

- x, y, z: Raumkoordinaten

- µ: Winkel zwischen 2 und 3

## Patentansprüche

1. Montagesystem (1), insbesondere für die Gebäudeinstallation, mit einem aus einem zusammengeklappten Zustand in einen ausgeklappten Zustand bewegbaren Träger (2) für Funktionseinheiten, welcher über eine Schwenkeinrichtung (4, 40) für den Träger (2) gelenkig an einem Basisteil (3) gelagert ist,
**dadurch gekennzeichnet, dass** die Schwenkeinrichtung (4, 40) zur Überführung des Trägers aus dem zusammengeklappten Zustand in den ausgeklappten Zustand über mindestens zwei Freiheitsgrade der Bewegung verfügt, und zwar über mindestens einen Freiheitsgrad hinsichtlich einer translatorischen Bewegung (P1, P3, P4) des Trägers (2) gegenüber dem Basisteil (3) und über mindestens einen Freiheitsgrad hinsichtlich einer Schwenkbewegung (P1', P2) des Trägers (2) gegenüber dem Basisteil (3).

2. Montagesystem (1) nach Anspruch 1,
**dadurch gekennzeichnet, dass** die Schwenkeinrichtung (4, 40) als ein einerseits am Träger (2) drehbar angelenkter (A1) und andererseits am Basisteil (3) jeweils drehbar angelenkter (A2) Scharnierbügel (4) ausgebildet ist.

3. Montagesystem (1) nach Anspruch 1 oder 2,
**dadurch gekennzeichnet, dass** der Träger (2) an der Schwenkeinrichtung (4) über vier Freiheitsgrade der Bewegung verfügt, und zwar über zwei Freiheitsgrade hinsichtlich einer translatorischen Bewegung (P1, P3, P4) des Trägers (2) gegenüber dem Basisteil (3) und über zwei Freiheitsgrade hinsichtlich einer Schwenkbewegung (P1', P2) des Trägers (2) gegenüber dem Basisteil (3).

4. Montagesystem (1) nach Anspruch 2 oder 3,
**dadurch gekennzeichnet, dass** der Scharnierbügel (4) in seiner Anlenkung (A1) am Träger (2) einendig als Dreh-Schiebe-Lager (6) ausgebildet ist.

5. Montagesystem (1) nach einem der Ansprüche 2 bis 4,
**dadurch gekennzeichnet, dass** der Scharnierbügel (4) in seiner Anlenkung (A1) am Träger (2) mit Abstand (A) zum Trägerrand (2a) angelenkt ist.

6. Montagesystem (1) nach einem der Ansprüche 2 bis 5,
**dadurch gekennzeichnet, dass** der Scharnierbügel (4) symmetrisch, insbesondere H-förmig, ausgebildet ist, wobei er vorzugsweise beidseitig ein Dreh-Schiebe-Lager (6) für den Träger (2) aufweist.

7. Montagesystem (1) nach einem der Ansprüche 2 bis 6,
**dadurch gekennzeichnet, dass** der Scharnierbügel (4) aus zwei fest, vorzugsweise durch eine Verbindung mit Schrauben (11), verbindbaren Teilen (4a, 4b) besteht.

8. Montagesystem (1) nach einem der Ansprüche 2 bis 7,
**dadurch gekennzeichnet, dass** die Schwenkeinrichtung (4) eine ortsfeste Anlenkung (A2) am Basisteil (3) und eine gegenüber dem Basisteil (3) bewegliche Anlenkung (A1) für den Träger (2) aufweist, welche eine Schwenkachse für den Träger (2) ausbildet.

9. Montagesystem (1) nach einem der Ansprüche 1 bis 8,
**dadurch gekennzeichnet, dass** ein Winkel (µ), den der Träger (2) im aufgeklappten Zustand mit dem Basisteil (3) einschließt, durch eine Länge (L) eines zwischen dem Träger (2) und dem Basisteil (3) aufgespannten Fangseiles (5) festlegbar ist.

10. Montagesystem (1) nach Anspruch 1,
**dadurch gekennzeichnet, dass** die Schwenkeinrichtung (4, 40) als einerseits mit dem Träger (2) und andererseits mit dem Basisteil (3) fest verbindbarer bzw. verbundener Gelenkstift (40) ausgebildet ist.

11. Montagesystem (1) nach Anspruch 10,
**dadurch gekennzeichnet, dass** der Gelenkstift (40) ein Stiftteil (20), das in einer am Basisteil (3) befestigten Führungshülse (21) verschiebbar gleitgeführt ist, einen unter der Spannung einer Feder (22) stehenden Sperrhaken (23) für das Stiftteil (20), welcher durch einen rückseitigen Anschlag am Stiftteil (20) die Verschiebebewegung des Stiftteils (20) im zusammengeklappten Zustand einseitig hemmt, sowie Anschlagteil (25) am Stiftteil (20) für die Führungshülse (21) umfasst.

12. Montagesystem (1) nach Anspruch 11,
**dadurch gekennzeichnet, dass** das verschiebbare Stiftteil (20) zweiteilig ausgeführt ist, wobei es ein gegenüber der Führungshülse (21) nicht verschwenkbares erstes Stiftelement (20a) und ein gegenüber dem ersten Stiftelement (20a) und der Führungshülse (21) verschwenkbares zweites Stiftelement (20b) umfasst, die über ein Gelenk (20c) miteinander verbunden sind.

13. Montagesystem (1) nach Anspruch 12,
**dadurch gekennzeichnet, dass** der Träger (2) fest mit dem verschwenkbarem Stiftelement (20b) des Gelenkstifts (40) verbunden ist.

14. Montagesystem (1) nach Anspruch 11 oder 12,
**dadurch gekennzeichnet, dass** die Stiftelemente (20a, 20b) einander komplementäre Anschlagflächen (20d, 20e) zur Begrenzung der Schwenkbewegung des verschwenkbaren Stiftelementes (20b) aufweisen.

15. Montagesystem (1) nach einem der Ansprüche 1 bis 14,
**dadurch gekennzeichnet, dass** die Schwenkeinrichtung (4, 40) und/oder der Träger (2) Mittel (5, 6, 20d, 20e, 23, 25) umfasst, welche während der Bewegung des Trägers (2) aus dem zusammengeklappten Zustand in den ausgeklappten Zustand und während der Bewegung des Trägers (2) aus dem ausgeklappten Zustand in den zusammengeklappten Zustand sukzessiv einen oder mehrere der Freiheitsgrade individuell blockieren bzw. wieder freigeben.

16. Montagesystem (1) nach einem der Ansprüche 1 bis 15,
**dadurch gekennzeichnet, dass** eine Schwenkachse der Schwenkeinrichtung (4, 40) für den Träger (2) parallel und mit Abstand (A) zu einem Trägerrand (2a) verläuft.

17. Montagesystem (1) nach einem der Ansprüche 1 bis 16,
**dadurch gekennzeichnet, dass** pro Träger (2) ein oder mehrere, insbesondere zwei Schwenkeinrichtungen (4, 40), zur Verbindung mit einem Basisteil (3) vorgesehen sind.

18. Montagesystem (1) nach einem der Ansprüche 1 bis 17,
**dadurch gekennzeichnet, dass** der Träger (2) im aufgeklappten Zustand mit dem Basisteil (3) einen Winkel (µ) im Bereich von 60° bis 120°, insbesondere im Bereich von 70° bis 90°, einschließt.
